# EUROPÄISCHE PATENTSCHRIFT

(11) **EP 3 617 285 B1**
(45) Veröffentlichungstag und Bekanntmachung des Hinweises auf die Patenterteilung: **13.10.2021**
(21) Anmeldenummer: 18191152.0
(22) Anmeldetag: 28.08.2018
(51) Int. Cl.: C09J 107/02, C09J 109/02, C09J 111/02, C09J 113/02, C09J 121/02, B60C 1/00, B60C 9/00

(54) **PROZESS ZUR AUSRÜSTUNG VON TEXTILEN FESTIGKEITSTRÄGERN MIT EINER HAFTMISCHUNG**
PROCESS FOR THE FINISHING OF TEXTILE RIGIDITY SUPPORTS WITH AN ADHESIVE MIXTURE
PROCÉDÉ D'ÉQUIPEMENT DES SUPPORTS DE RÉSISTANCE TEXTILES D'UN MÉLANGE ADHÉSIF

(43) Veröffentlichungstag der Anmeldung: 04.03.2020
(73) Patentinhaber: Cordenka GmbH & Co. KG, 63784 Obernburg (DE)
(72) Erfinder: LANG, Daniel, 63849 Leidersbach (DE); KIESLING, Frank, 63911 Klingenberg (DE); BÜTTNER, Tobias, 63920 Großheubach (DE)
(74) Vertreter: CPW GmbH

(56) Entgegenhaltungen:
- EP-A1- 2 955 268
- EP-A1- 3 258 007
- EP-A1- 3 258 008
- EP-A2- 2 989 243
- US-A1- 2002 144 779
- US-A1- 2015 259 560

## Beschreibung

Die Erfindung betrifft ein Verfahren zum Verbinden eines textilen Festigkeitsträgers mit einer Gummi-Komponente.

Wenn textile Festigkeitsträger mit einer Gummi-Komponente verbunden werden sollen, müssen sie häufig mit einer Haftmischung ausgerüstet werden. Hierzu sind Haftmischungen bekannt, die einerseits eine Vernetzung mit der Gummi-Komponente herstellen und andererseits auch an den textilen Festigkeitsträger binden.

Im Stand der Technik ist seit langem das so genannte RFL-System (Resorcin-Formaldehyd-Latex) beschrieben. Bei diesem bekannten Verfahren erfolgt zunächst eine Imprägnierung des textilen Festigkeitsträgers durch einen Dip, wodurch eine Haftmischung aus Latex und einem Kondensat aus Resorcin und Formaldehyd in und auf den textilen Festigkeitsträger ein- bzw. aufgebracht wird. Der Latex ist zumeist ein Styrol-Butadien-Vinylpyridin-Terpolymer (SBR-Latex). Der Dip kann neben dem Resorcin-Formaldehyd-Vorkondensat auch noch weitere Additive, wie Wachse oder Tackifier, enthalten.

Die Eigenschaften des Dips, wie Viskosität, Beständigkeit, Haftfestigkeit, Flexibilität, werden maßgeblich von dem Reaktionsprodukt genannter Substanzen bestimmt. Allerdings gilt insbesondere das Formaldehyd (Methanal) als krebserregend und es wird seit langem angestrebt, Haftmischungen herzustellen, die auf die Anwesenheit von Formaldehyd verzichten können, ohne dabei aber die guten haftvermittelnden Eigenschaften des RFL-Systems zu verlieren. Darüber hinaus ist auch die Resorcin-Komponente (1,3-Dihydroxybenzol) ein toxischer Bestandteil, sodass gleichermaßen angestrebt wird, auch die Anwesenheit dieser Komponente zu minimieren oder besser noch ganz zu vermeiden.

Die DE 102014214858 schlägt zu diesem Zweck die Verwendung einer Haftmischung für die Verbindung eines Textils mit einer Gummi-Komponente vor,
wobei die Haftmischung mindestens einen Latex und einen formaldehydfreien Vernetzer umfasst und wobei der Vernetzer mindestens eine Substanz aus mindestens einer der Gruppen der Oxazolidine, Chinondioxime und maleinisierten Polybutadiene umfasst. Durch Verwendung der Substanzen aus den genannten Gruppen wird eine Haftmischung erhalten, bei der auf Formaldehyd (Methanal) und Resorcin verzichtet werden kann.

Die Herstellung gemäß DE 102014214858 erfolgt in einem Zweistufenverfahren. In einer ersten Stufe wird der Vernetzer hergestellt, der anschließend mit Latex versetzt wird. Als Kautschuk-Komponente kann SBR-Latex im Verschnitt mit Vinylpyridin-Latex (VP-Latex) verwendet werden. Nach einer Reifezeit (beispielsweise etwa 6 Stunden) wird die Haftmischung auf das Textil aufgebracht, bei erhöhter Temperatur (beispielsweise 100 °C bis 130 °C) vorgetrocknet, um schließlich in einem Haupttrockner bei weiter erhöhter Temperatur (beispielsweise 150 °C bis 230 °C) mit den Fasern des Textils zur Reaktion gebracht zu werden.

Ein typischer Herstellungsprozess von mit Latex beschichteten Textilien unter Verwendung von RF-freien Haftungsmischungen ist in der DE 102014211365 beschrieben, in der Korde aus Nylon und Polyester zunächst in einen Pre-Dip - enthaltend Haftvermittler und Wasser - getaucht werden, worauf ein Trocknungsschritt folgt. Anschließend werden die getrockneten Korde durch ein weiteres Dip-Bad getaucht, wobei dieses jetzt Wasser und Latex enthält. Schließlich wird wiederum getrocknet.

Die Verwendung der Haftmischung der DE 102014214858 im Prozess gemäß DE 102014211365 führt zum Einsatz von deutlich umweltfreundlicheren Substanzen bei gleichzeitig guten Haftungseigenschaften zwischen textilen Festigkeitsträgern und Gummi-Komponente.

Aufgabe der vorliegenden Erfindung ist es, das Verfahren des Standes der Technik weiter zu verbessern, insbesondere ein Verfahren zur Verfügung zu stellen, das kostengünstig und energiesparend einzusetzen ist und sich hervorragend für die Haftung von Gummi zu textilen Festigkeitsträgern aus cellulosischen Materialien, wie z.B. Rayon oder Lyocell, eignet.

Die erfindungsgemäße Aufgabe wird gelöst durch ein Verfahren zum Verbinden eines textilen Festigkeitsträgers mit einer Gummi-Komponente mittels Einsatzes einer Haftmischung, wobei die Haftmischung mindestens einen Latex, mindestens ein Epoxid, mindestens ein Isocyanat und mindestens ein maleinisiertes Polybutadien (MAPBD) enthält, wobei das mindestens eine Epoxid mindestens bifunktionell ist und das mindestens eine Isocyanat mindestens bifunktionell ist, dadurch gekennzeichnet, dass der textile Festigkeitsträger durch einen Dip in einem Einstufenprozess mit der Haftmischung benetzt wird.

Im Gegensatz zum Stand der Technik wird hier also in einem einstufigen Prozess unter Einsatz von nur einem, den Dip enthaltenden Tauchbad, das bereits alle Komponenten enthält, der haftungsaktivierte textile Festigkeitsträger erhalten. Da üblicherweise eine hinreichend gute Haftung nur erzielt wird, wenn der textile Festigkeitsträger zunächst in einem vorgelagerten Prozessschritt mit einer Mischung aus Isocyanat und Epoxid behandelt wird, ist dieses Ergebnis überraschend.

Dabei reagiert der Vernetzer direkt mit der Kautschuk-Komponente des Haftvermittlers. Eine Verbindung mit der Matrix der Gummi-Komponente erfolgt durch Covulkanisation.

Sowohl für das mindestens eine Epoxid als auch für das mindestens eine Isocyanat gilt, dass keine oder eine nicht ausreichende Vernetzung zwischen dem textilen Festigkeitsträger und der Gummi-Komponente auftritt, wenn diese nur monofunktionell sind.

Der Latex kann ein Vinylpyridin-Latex, ein Styrol-Butadien-Latex, ein Nitril-Butadien-Latex, ein Styrol-Butadien-Vinylpyridin-Terpolymer, Chloropren oder Naturkautschuk sein.

Außerdem kann der Dip sowie auch die Haftmischung frei von Resorcin-Harz sein.

In einer besonderen Ausführungsform beinhaltet der Dip, der als wässrige Suspension vorliegt, für die Imprägnierung des textilen Festigkeitsträgers mindestens einen Latex, mindestens ein Epoxid, mindestens ein Isocyanat und mindestens ein maleinisiertes Polybutadien (MAPBD).

Bei einem Dip mit einem Gesamtfeststoffgehalt von 12 % kann das mindestens eine Epoxid einen prozentualen Gewichtsanteil, bezogen auf die Gesamtmasse des Dips, von mindestens 0.01 %, bevorzugt von mindestens 0.05 % und noch bevorzugter von mindestens 0.07 % aufweisen.

Bei einem Dip mit einem Gesamtfeststoffgehalt von 12 % kann das mindestens eine Epoxid einen prozentualen Gewichtsanteil, bezogen auf die Gesamtmasse des Dips, von maximal 1.0 %, bevorzugter von maximal 0.8 % und noch bevorzugter von maximal 0.7 % aufweisen.

Bei einem Dip mit einem Gesamtfeststoffgehalt von 12 % kann das mindestens eine Isocyanat einen prozentualen Gewichtsanteil, bezogen auf die Gesamtmasse des Dips, von mindestens 0.1 %, bevorzugt von mindestens 0.3 % und noch bevorzugter von mindestens 0.4 % aufweisen.

Bei einem Dip mit einem Gesamtfeststoffgehalt von 12 % kann das mindestens eine Isocyanat einen prozentualen Gewichtsanteil, bezogen auf die Gesamtmasse des Dips, von maximal 5.0 %, bevorzugter von maximal 4.5 % und noch bevorzugter von maximal 3.5 % aufweisen.

Bei einem Dip mit einem Gesamtfeststoffgehalt von 12 % kann das mindestens eine maleinisierte Polybutadien einen prozentualen Gewichtsanteil, bezogen auf die Gesamtmasse des Dips, von mindestens 0.1 %, bevorzugt von mindestens 0.2 % und noch bevorzugter von mindestens 0.3 % aufweisen.

Bei einem Dip mit einem Gesamtfeststoffgehalt von 12 % kann das mindestens eine maleinisierte Polybutadien einen prozentualen Gewichtsanteil, bezogen auf die Gesamtmasse des Dips, von maximal 1.5 %, bevorzugter von maximal 1.1 % und noch bevorzugter von maximal 0.8 % aufweisen.

Bei einem Dip mit einem Gesamtfeststoffgehalt von 12 % kann der mindestens eine Latex einen prozentualen Gewichtsanteil, bezogen auf die Gesamtmasse des Dips, von mindestens 6.0 %, bevorzugt von mindestens 7.0 % und noch bevorzugter von mindestens 7.4 % aufweisen.

Bei einem Dip mit einem Gesamtfeststoffgehalt von 12 % kann der mindestens eine Latex einen prozentualen Gewichtsanteil, bezogen auf die Gesamtmasse des Dips, von maximal 13.0 %, bevorzugter von maximal 12.0 % und noch bevorzugter von maximal 11.0 % aufweisen.

Des Weiteren kann das Massenverhältnis zwischen dem mindestens einen Epoxid und dem mindestens einen Isocyanat auf der einen Seite und dem mindestens einen Latex und dem mindestens einen maleinisierten Polybutadien auf der anderen Seite mindestens 0.01, bevorzugter mindestens 0.09, noch bevorzugter mindestens 0.15 sein.

Zudem kann das Massenverhältnis zwischen dem mindestens einen Epoxid und dem mindestens einen Isocyanat auf der einen Seite und dem mindestens einen Latex und dem mindestens einen maleinisierten Polybutadien auf der anderen Seite höchstens 0.5, bevorzugter höchstens 0.3, noch bevorzugter höchstens 0.2 sein.

Das mindestens eine Isocyanat kann als freies Isocyanat vorliegen oder als geschütztes Isocyanat. Eine bevorzugte Schutzgruppe für das mindestens eine Isocyanat ist ε-Caprolactam.

Nach der Benetzung des textilen Festigkeitsträgers mit der Haftmischung kann der textile Festigkeitsträger getrocknet werden.

In einer bevorzugten Ausführungsform erfolgt die Trocknung bei einer Temperatur von mindestens 175 °C, bevorzugter bei einer Temperatur von mindestens 185 °C, noch bevorzugter bei einer Temperatur von mindestens 195 °C und am bevorzugtesten bei einer Temperatur von mindestens 200 °C.

In einer weiteren Ausführungsform erfolgt die Trocknung bei einer Temperatur von höchstens 250 °C, bevorzugter bei einer Temperatur von höchstens 240 °C und noch bevorzugter bei einer Temperatur von höchstens 230°C.

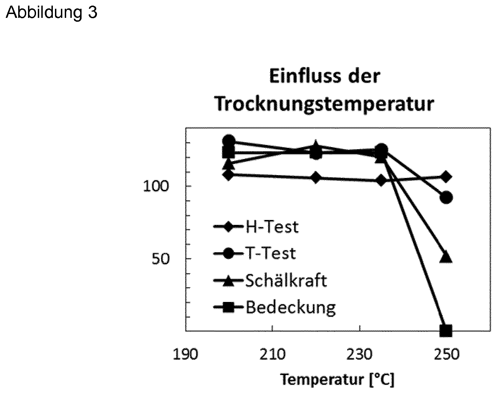

Bezogen auf die optional vorhandene Schutzgruppe des mindestens einen Isocyanats wäre eine Trocknungstemperatur von weniger als 175 °C unvorteilhaft, da bei einer niedrigeren Temperatur das geschützte mindestens eine Isocyanat nicht oder nur teilweise entschützt würde und somit keine oder eine nicht ausreichende Vernetzung zwischen dem textilen Festigkeitsträger und der Gummi-Komponente auftritt. Trocknungstemperaturen von mehr als 250 °C resultieren dagegen in deutlich niedrigeren Werten für Bedeckung und Schälkräfte (siehe Tabelle 5 und Abbildung 3).

In einer bevorzugten Ausführungsform des erfindungsgemäßen Verfahrens handelt es sich bei dem textilen Festigkeitsträger um eine cellulosische Verbindung.

Diese cellulosische Verbindung kann Rayon oder Lyocell sein.

Mit dem erfindungsgemäßen Verfahren erhält man haftungsaktivierte textile Festigkeitsträgers zur Verstärkung von Elastomeren, Kunststoffen, Duroplasten und Thermoplasten für technische Anwendungen, wie z.B. PKW-Reifen, LKW-Reifen, Schläuche und Riemen.

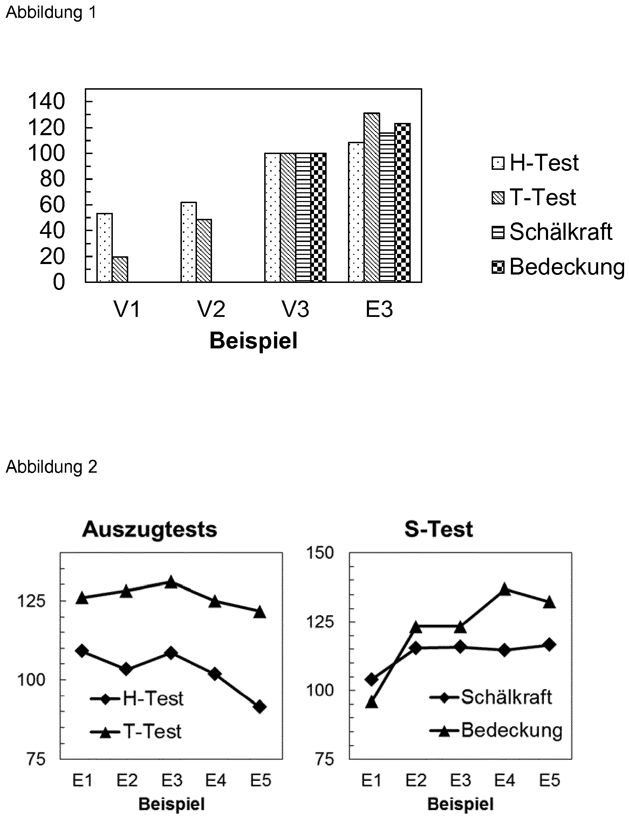

Die Erfindung wird durch die nachfolgenden Beispiele, die dazugehörigen Tabellen 1 bis 4 sowie durch Abbildungen 1 bis 4 genauer dargestellt.

### Haftaktivierung textiler Festigkeitsträger gemäß des Stands der Technik

### Vergleichsbeispiel 1 (V1):

Cellulose-Kord, hergestellt aus zwei Rayon-Garnen mit einer Stärke von 1840 dtex (1840 x 2), wurde durch eine wässrige Lösung enthaltend 1.5 Gew.-% maleinisiertes Polybutadien (MAPBD) getaucht. Anschließend wurde der Kord für 120 Sekunden bei 175 °C getrocknet.

### Vergleichsbeispiel 2 (V2):

Cellulose-Kord, hergestellt aus zwei Rayon-Garnen mit einer Stärke von 1840 dtex (1840 x 2), wurde durch eine wässrige Lösung enthaltend 0.7 Gew.-% MAPBD und 11.5 Gew.-% VP-Latex getaucht. Anschließend wurde der Kord für 120 Sekunden bei 175 °C getrocknet.

### Vergleichsbeispiel 3 (V3):

Cellulose-Kord, hergestellt aus zwei Rayon-Garnen mit einer Stärke von 1840 dtex (1840 x 2), wurde durch eine wässrige Lösung enthaltend 5.6 Gew.-% Isocyanat und 0.9 Gew.-% Glycidylether getaucht. Anschließend wurde der Kord für 120 Sekunden bei 220 °C getrocknet. Der getrocknete Kord wurde durch eine zweite wässrige Dip-Lösung getaucht, welche 1.1 Gew.-% MAPBD und 16.9 Gew.-% VP-Latex enthielt. Danach wurde der Kord für 120 Sekunden bei 235 °C getrocknet.

### Erfindungsgemäße Haftaktivierung textiler Festigkeitsträger

### Erfindungsgemäßes Beispiel 1 (E1):

Cellulose-Kord, hergestellt aus zwei Rayon-Garnen mit einer Stärke von 1840 dtex (1840 x 2), wurde durch eine wässrige Lösung enthaltend 0.5 Gew.-% Isocyanat, 0.1 Gew.-% Glycidylether, 0.7 Gew.-% MAPBD und 10.7 Gew.-% VP-Latex getaucht. Anschließend wurde der Kord für 120 Sekunden bei 200 °C getrocknet.

### Erfindungsgemäßes Beispiel 2 (E2):

Cellulose-Kord, hergestellt aus zwei Rayon-Garnen mit einer Stärke von 1840 dtex (1840 x 2), wurde durch eine wässrige Lösung enthaltend 0.9 Gew.-% Isocyanat, 0.2 Gew.-% Glycidylether, 0.6 Gew.-% MAPBD und 10.3 Gew.-% VP-Latex getaucht. Anschließend wurde der Kord für 120 Sekunden bei 200 °C getrocknet.

### Erfindungsgemäßes Beispiel 3 (E3):

Cellulose-Kord, hergestellt aus zwei Rayon-Garnen mit einer Stärke von 1840 dtex (1840 x 2), wurde durch eine wässrige Lösung enthaltend 1.6 Gew.-% Isocyanat, 0.3 Gew.-% Glycidylether, 0.6 Gew.-% MAPBD und 9.6 Gew.-% VP-Latex getaucht. Anschließend wurde der Kord für 120 Sekunden bei 200 °C getrocknet.

### Erfindungsgemäßes Beispiel 4 (E4)

Cellulose-Kord, hergestellt aus zwei Rayon-Garnen mit einer Stärke von 1840 dtex (1840 x 2), wurde durch eine wässrige Lösung enthaltend 2.4 Gew.-% Isocyanat, 0.4 Gew.-% Glycidylether, 0.6 Gew.-% MAPBD und 8.7 Gew.-% VP-Latex getaucht. Anschließend wurde der Kord für 120 Sekunden bei 200 °C getrocknet.

### Erfindungsgemäßes Beispiel 5 (E5)

Cellulose-Kord, hergestellt aus zwei Rayon-Garnen mit einer Stärke von 1840 dtex (1840 x 2), wurde durch eine wässrige Lösung enthaltend 3.4 Gew.-% Isocyanat, 0.6 Gew.-% Glycidylether, 0.5 Gew.-% MAPBD und 7.5 Gew.-% VP-Latex getaucht. Anschließend wurde der Kord für 120 Sekunden bei 200 °C getrocknet.

**Tabelle 1: Dipzusammensetzung der Vergleichsbeispiele.**

| | Beispiel | V1 | | V2 | | V3 | |
|---|---|---|---|---|---|---|---|
| | Gehalt im Gebinde | Einwaage [g] | Feststoffgehalt | Einwaage [g] | Feststoffgehalt | Einwaage [g] | Feststoffgehalt |
| | | | | | | **Vordip** | |
| Wasser | | | | | | 718.5 | 0% |
| Glycidylether | 100% | | | | | 7.4 | 0.9% |
| Isocyanat | 60% | | | | | 74.2 | 5.6% |
| | | | | | | **Summe 800.1** | **6.5%** |
| | | | | | | **Dip** | |
| Wasser | | 950 | 0.0% | 688.7 | 0.0% | 448.3 | 0.0% |
| MAPBD | 30% | 50 | 1.5% | 24.4 | 0.7% | 30 | 1.1% |
| VP-Latex | 40% | | | 287.0 | 11.5% | 351.3 | 16.9% |
| | | | | | | **Summe 829.6** | **18.0%** |
| **Summe** | | **1000.0** | **1.50%** | **1000.0** | **12.2%** | | |

**Tabelle 2: Dipzusammensetzung der erfindungsgemäßen Beispiele.**

| | Beispiel | E1 | | E2 | | E3 | | E4 | | E5 | |
|---|---|---|---|---|---|---|---|---|---|---|---|
| | Gehalt im Gebinde | Einwaage [g] | Feststoffgehalt | Einwaage [g] | Feststoffgehalt | Einwaage [g] | Feststoffgehalt | Einwaage [g] | Feststoffgehalt | Einwaage [g] | Feststoffgehalt |
| Wasser | 100 | 630.1 | 0% | 634.5 | 0% | 854.7 | 0.0% | 649.2 | 0% | 660.2 | 0% |
| Glycidylether | 100 | 0.7 | 0.1% | 1.4 | 0.2% | 3.3 | 0.3% | 3.6 | 0.4% | 5.2 | 0.6% |
| Isocyanat | 60 | 7.2 | 0.5% | 14 | 0.9% | 31.4 | 1.6% | 35.4 | 2.4% | 51.3 | 3.4% |
| MAPBD | 30 | 20.5 | 0.7% | 19.5 | 0.6% | 24.6 | 0.6% | 16.6 | 0.6% | 14.4 | 0.5% |
| VP-Latex | 40 | 241.7 | 10.7% | 230.7 | 10.3% | 287 | 9.6% | 195.2 | 8.7% | 169.3 | 7.5% |
| **Summe** | | **900.2** | **12.0%** | **900.1** | **12.0%** | **1201** | **12.0%** | **900.0** | **12.0%** | **900.4** | **12.0%** |

Die Erfindung wird anhand der folgenden Beispiele und Abbildungen näher erläutert.

Abbildung 1: relative Haftungsergebnisse der Vergleichsbeispiele und des erfindungsgemäßen Beispiels 3.

Abbildung 2: Haftungsergebnisse der erfindungsgemäßen Beispiele in Relation zu V3.

Abbildung 3: Haftungsergebnisse für verschiedene Trocknungstemperaturen in Relation zu V3.

### Durchführung der Haftungstests

Für die Haftungstests wurden die ausgerüsteten Korde in eine Gummimischung eingebettet und mit dieser covulkanisiert. Anschließend wurden Auszugs- bzw. Schältests vorgenommen. Der sogenannte H-Test wurde nach ASTM D4776 mit einer Einbettlänge von 9.52 mm durchgeführt. Der sogenannte T-Test wurde in Anlehnung an ASTM D2229 mit einer Einbettlänge von 5.0 mm durchgeführt. Der sogenannte S-Test, in dem Schälkraft und Bedeckungsgrad ermittelt werden, wurde nach ASTM D4393 durchgeführt. Tabellen 3 und 4 sowie Abbildungen 1 und 2 geben die Ergebnisse in prozentualer Relation zu Vergleichsbeispiel 3 (V3) wider.

**Tabelle 3: relative Haftungsergebnisse der Vergleichsbeispiele.**

| Beispiel | H-Test | T-Test | Schälkraft | Bedeckung |
|---|---|---|---|---|
| V1 | 53 | 20 | n.b. | n.b. |
| V2 | 62 | 48 | n.b. | n.b. |
| V3 | 100 | 100 | 100 | 100 |

In den Vergleichsbeispielen 1 und 2 (V1 und V2) wurde, wie in DE 102014211365 gelehrt, lediglich eine wässrige Dispersion enthaltend MAPBD bzw. MAPBD und VP-Latex zur Ausrüstung des Kords verwendet. Die Auszugskräfte in H- und T-Test waren hier so gering, dass auf einen S-Test verzichtet wurde.

In Vergleichsbeispiel 3 (V3) wurde die von A. Gomes, et al. vorgeschlagene Haftmischung ("Adhesion activation of tire textiles by resorcinol formaldehyde free coatings", Rubberworld.com, März 2016, S. 24ff) im zweistufigen Prozess, wie in DE 102014211365 gelehrt, auf den Kord aufgetragen. Die Auszugskräfte in H- und T-Test sind etwa doppelt so hoch wie in V1 und V2.

Für den erfindungsgemäßen Prozess wurden unterschiedliche Rezepturen im Eintopf-Verfahren getestet (E1 bis E5). Die Haftungsergebnisse zeigen, dass für den Anteil von Isocyanat und Epoxid in der Diprezeptur bezüglich der Auszugskräfte ein Maximum durchlaufen wird. Die S-Test-Ergebnisse hingegen nähern sich asymptotisch einem hohen Niveau. Tabelle 4 und Abbildung 2 machen deutlich, dass das Mischungsverhältnis in Dipformulierung E3 das Optimum darstellt.

Weiterhin konnten mit dem erfindungsgemäßen einstufigen Prozess und der Rezeptur E3 die Auszugskräfte und S-Test-Ergebnisse im Vergleich zu V3 noch gesteigert werden.

**Tabelle 4: Haftungsergebnisse der erfindungsgemäßen Beispiele in Relation zu V3.**

| Beispiel | H-Test | T-Test | Schälkraft | Bedeckung |
|---|---|---|---|---|
| E1 | 109 | 126 | 104 | 96 |
| E2 | 103 | 128 | 115 | 123 |
| E3 | 108 | 131 | 116 | 123 |
| E4 | 102 | 125 | 115 | 137 |
| E5 | 91 | 122 | 117 | 132 |

### Temperaturabhängigkeit der Haftung

Cellulose-Korde, hergestellt aus zwei Rayon-Garnen mit einer Stärke von 1840 dtex (1840 x 2), die durch eine Dip-Lösung mit der Rezeptur des erfindungsgemäßem Beispiels 3 (E3) getaucht wurden, wurden anschließend jeweils für 120 Sekunden bei 200 °C, 220 °C, 235 °C bzw. 250 °C getrocknet. Anschließend wurden die erhaltenen Korde H-, T- und S-Tests unterzogen. Die Ergebnisse in prozentualer Relation zu V3 sind in Tabelle 5 und Abbildung 3 dargestellt.

**Tabelle 5: relative Haftungsergebnisse für verschiedene Trocknungstemperaturen in Relation zu V3.**

| Temperatur [°C] | H-Test | T-Test | Schälkraft | Bedeckung |
|---|---|---|---|---|
| 200 | 108 | 131 | 116 | 123 |
| 220 | 106 | 123 | 128 | 123 |
| 235 | 104 | 125 | 120 | 123 |
| 250 | 107 | 92 | 52 | 0 |

Zwischen 200 °C und 230 °C sind sämtliche Haftungsparameter auf nahezu konstant hohem Niveau. Zwischen 230 °C und 250 °C brechen die Schälkraft und die Bedeckung deutlich ein.

## Patentansprüche

1. Verfahren zum Verbinden eines textilen Festigkeitsträgers mit einer Gummi-Komponente mittels Einsatzes einer Haftmischung, wobei die Haftmischung mindestens einen Latex, mindestens ein Epoxid, mindestens ein Isocyanat und mindestens ein maleinisiertes Polybutadien (MAPBD) enthält, wobei das mindestens eine Epoxid mindestens bifunktionell ist und das mindestens eine Isocyanat mindestens bifunktionell ist, **dadurch gekennzeichnet, dass** der textile Festigkeitsträger durch einen Dip in einem Einstufenprozess mit der Haftmischung benetzt wird.

2. Das Verfahren nach Anspruch 1, **gekennzeichnet dadurch, dass** der Dip frei von Resorcin-Harz ist.

3. Das Verfahren nach einem der vorhergehenden Ansprüche, **dadurch gekennzeichnet, dass** der Latex ein Vinylpyridin-Latex, Styrol-Butadien-Latex, Nitril-Butadien-Latex, Styrol-Butadien-Vinylpyridin-Terpolymer, Chloropren oder Naturkautschuk ist.

4. Das Verfahren nach einem der vorhergehenden Ansprüche, wobei in dem Dip das Verhältnis der Summe der Feststoffgehalte von Epoxid und Isocyanat zur Summe der Feststoffgehalte der enthaltenen Latizes und MAPBD mindestens 0.01 und höchstens 0.5, bevorzugter mindestens 0.09 und höchstens 0.3 und noch bevorzugter mindestens 0.15 und höchstens 0.2 beträgt.

5. Das Verfahren nach einem der vorhergehenden Ansprüche, **dadurch gekennzeichnet, dass** der textile Festigkeitsträger nach dem Benetzen mit der Haftmischung getrocknet wird.

6. Das Verfahren nach Anspruch 5, **dadurch gekennzeichnet, dass** die Trocknungstemperatur in einem Bereich zwischen 175 °C und 250°C, bevorzugt in einem Bereich zwischen 185 °C und 240 °C, noch bevorzugter in einem Bereich zwischen 195 °C und 230 °C und am bevorzugtesten in einem Bereich zwischen 200 °C und 230 °C liegt.

7. Das Verfahren nach einem der vorhergehenden Ansprüche, **dadurch gekennzeichnet, dass** es sich bei dem textilen Festigkeitsträger um eine cellulosische Verbindung handelt.

8. Das Verfahren nach Anspruch 7, **dadurch gekennzeichnet, dass** die cellulosische Verbindung des textilen Festigkeitsträger Rayon oder Lyocell ist.

9. Verwendung des nach einem der vorhergehenden Ansprüche beschichteten textilen Festigkeitsträgers zur Verstärkung von Elastomeren, Kunststoffen, Duroplasten und Thermoplasten für technische Anwendungen, wie z.B. PKW-Reifen, LKW-Reifen, Schläuche und Riemen.

## Claims

1. Process for bonding a textile rigidity support to a rubber component by use of an adhesive composition, the adhesive composition containing at least one latex, at least one epoxide, at least one isocyanate and at least one maleated polybutadiene (MAPBD), wherein the at least one epoxide is at least bifunctional and the at least one isocyanate is at least bifunctional, **characterised in that** the textile rigidity support is wetted with the adhesive composition by a dip in a one-step process.

2. Process according to claim 1, **characterised in that** the dip is free of resorcinol resin.

3. Process according to any one of the preceding claims, **characterised in that** the latex is a vinylpyridine latex, styrene-butadiene latex, nitrile-butadiene latex, styrene-butadiene-vinylpyridine terpolymer, chloroprene or natural rubber.

4. Process according to any one of the preceding claims, wherein in the dip the ratio of the sum of the solid contents of epoxy and isocyanate to the sum of the solid contents of the contained latices and MAPBD is at least 0.01 and at most 0.5, more preferably at least 0.09 and at most 0.3, and still more preferably at least 0.15 and at most 0.2.

5. Process according to any one of the preceding claims, **characterised in that** the textile rigidity support is dried after wetting with the adhesive mixture.

6. Process according to claim 5, **characterised in that** the drying temperature is in a range between 175 °C and 250 °C, preferably in a range between 185 °C and 240 °C, more preferably in a range between 195 °C and 230 °C and most preferably in a range between 200 °C and 230 °C.

7. Process according to any one of the preceding claims, **characterised in that** the textile rigidity support is a cellulosic compound.

8. Process according to claim 7, **characterised in that** the cellulosic compound of the textile rigidity support is rayon or lyocell.

9. Use of the textile rigidity support coated according to any one of the preceding claims for reinforcing elastomers, plastics, thermosets and thermoplastics for technical applications, such as e.g. passenger vehicle tyres, goods vehicle tyres, hoses and belts.

## Revendications

1. Procédé pour relier un support de renfort textile à un composant en caoutchouc au moyen de l'emploi d'un mélange adhésif, dans lequel le mélange adhésif contient au moins un latex, au moins un époxyde, au moins un isocyanate et au moins un polybutadiène maléinisé (MAPBD), dans lequel l'au moins un époxyde est au moins bifonctionnel et l'au moins un isocyanate est au moins bifonctionnel, **caractérisé en ce que** le support de renfort textile est humidifié du mélange adhésif lors d'un processus en une seule étape par une enduction par trempage.

2. Procédé selon la revendication 1, **caractérisé en ce que** l'enduction par trempage est sans résine résorcinol.

3. Procédé selon l'une quelconque des revendications précédentes, **caractérisé en ce que** le latex est un latex vinylpyridine, un latex styrène-butadiène, un latex nitrile-butadiène, un terpolymère de styrène/butadiène/vinylpyridine, du chloroprène ou du caoutchouc naturel.

4. Procédé selon l'une quelconque des revendications précédentes, dans lequel dans l'enduction par trempage, le rapport de la somme des teneurs en matières solides d'époxyde et d'isocyanate par rapport à la somme des teneurs en matières solides des latex contenus et du MAPBD est d'au moins 0,01 et de 0,5 au maximum, de manière plus préférée d'au moins 0,09 et de 0,3 au maximum et de manière encore plus préférée d'au moins 0,15 et de 0,2 au maximum.

5. Procédé selon l'une quelconque des revendications précédentes, **caractérisé en ce que** le support de renfort textile est séché après l'humidification avec le mélange adhésif.

6. Procédé selon la revendication 5, **caractérisé en ce que** la température de séchage se situe dans une plage entre 175 °C et 250 °C, de manière préférée dans une plage entre 185 °C et 240 °C, de manière plus préférée dans une plage entre 195 °C et 230 °C et idéalement dans une plage entre 200 °C et 230 °C.

7. Procédé selon l'une quelconque des revendications précédentes, **caractérisé en ce que** le support de renfort textile est un composé cellulosique.

8. Procédé selon la revendication 7, **caractérisé en ce que** le composé cellulosique du support de renfort textile est de la rayonne ou du lyocell.

9. Utilisation du support de renfort textile revêtu selon l'une quelconque des revendications précédentes pour renforcer des élastomères, des matières synthétiques, des matières thermodurcissables et des matières thermoplastiques pour des applications techniques, telles que des pneumatiques de voitures de tourisme, des pneumatiques de camions, des tuyaux flexibles et des courroies.
